# EUROPEAN PATENT SPECIFICATION

(11) **EP 0 483 841 B1**
(45) Date of publication and mention of the grant of the patent: **10.12.1997**
(21) Application number: 91118586.6
(22) Date of filing: 31.10.1991
(51) Int. Cl.: F41G 7/00, F41G 7/32

(54) **Integrated fiber optic missile test system**
Integrierte optische Faserflugkörperprüfvorrichtung
Dispositif integré de test pour missile à fibre optique

(30) Priority: 01.11.1990 US 607959
(43) Date of publication of application: 06.05.1992
(73) Proprietor: Hughes Aircraft Company, Los Angeles, California 90045-0066 (US)
(72) Inventor: Petty, R.W., Canoga Park, CA 91307 (US); O'Brien, J., Thousand Oaks, CA 91360 (US); Kieselbach, David A., Simi Valley, CA 93063 (US); Buckley, Patrick A., Newbury Park, CA 91320 (US); Gorman, James M., Thousand Oaks, CA 91360 (US); Armijo, Theodore T., Northridge, CA 91324 (US)
(74) Representative: Witte, Alexander, Dr.-Ing.

(56) References cited:
- EP-A- 0 286 988
- FR-A- 2 639 123
- GB-A- 2 003 301
- US-A- 4 770 370
- MESURES , REGULATIONS , AUTOMATISME vol. 50, no. 1, January 1985, vol. 50, no. 1, January 1985, PARIS, FRANCE pages 57 - 60; J. P. VERNAY: 'Simulation au sol de missiles: la rapidité avant tout'

## Description

The invention relates to an integrated missile test system for fiber optic guided missiles.

Document EP-A-0 286 988 shows a test system for a missile, but not for a wire-guided missile. The missile tracking computer that is to be tested is outside of the missile.

Further, document US-A-4 770 370 discloses an optical fiber guided weapons system for firing a projectile and guiding said projectile to a target, including command and control means for receiving and processing target video data transmitted from said projectile and for transmitting guidance data to said projectile, but no test system for a missile.

Optical fibers offer the potential for significant improvements in the performance of guided missiles. Previous missile designs have required the use of special missile test connectors and missile interface hardware to allow test equipment to inject signals and measure responses to determine if the missile is working properly. The need for special connectors and interface hardware adds significantly to the cost of the missile.

Also, in accordance with conventional missile testing schemes, special telemetry equipment had to be developed and fabricated into the missile to gather flight data. This special telemetry equipment is costly and adds to the weight of the missile. Obviously, the added weight on the missile tends to force compromises in missile performance and capability.

Therefore, it is an object underlying the present invention to provide for a system for testing fiber optic guide missiles which is inexpensive and which does not require compromises in missile performance and capability.

According to the invention, this object is achieved by:
- First means for receiving first and second signals along an optical fiber from said missile, said first means including an optical transmitter and an optical receiver;
- second means for processing said first signal and for reformatting said first signal for display thereof;
- third means for processing said second signal and for reformatting said second signal for display thereof;
- fourth means for displaying the reformatted first signal;
- fifth means for displaying the reformatted second signal; and
- means for sending a test command signal to said missile.

The need in the art is, therefore, addressed by the integrated fiber optic missile test system of the present invention which includes circuits for receiving first and second signals along an optical fiber from a missile. A processor is included for reformatting the first and second signals for display thereof. The first and second signals are displayed in separate displays in an advantageous manner. In specific embodiments, the first signal is a video signal, the second signal is a test signal and circuitry is provided for sending a command signal to the missile.

Embodiments of the inventions are illustrated in the attached figures and will be described in the subsequent description of the embodiments. In the Figures
Fig. 1 is a block diagram illustrative of a test arrangement with a unit under test (UUT) and the integrated fiber optic missile test system of the present invention;
Fig. 2 illustrates the test station software utilized in the station computer of the present invention;
Fig. 3 illustrates a first illustrative test application utilizing the fiber optic missile test system of the present invention; and
Fig. 4 illustrates a second illustrative test application utilizing the fiber optic missile test system of the present invention.

Illustrative embodiments and exemplary applications will now be described with reference to the accompanying drawings to disclose the advantageous teachings of the present invention.

The present invention provides a system and method for testing missiles by fiber optic cable. In accordance with the present teachings, a test port is added to the fiber optic data link which allows the test equipment and associated software to i) command the missile to perform actions and monitor its responses to verify that the missile is operating correctly prior to launch and ii) monitor and record data flow between the integrated fiber optic missile test system of the present invention and the missile to allow analysis of the missile's actual performance during flight tests.

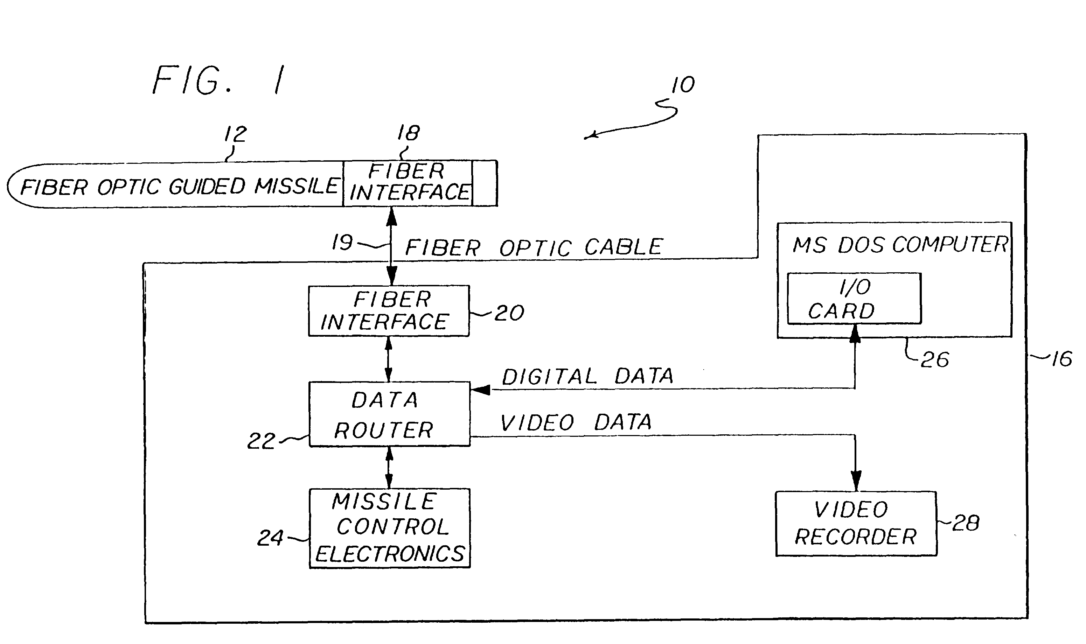

Fig. 1 is a block diagram illustrating a test arrangement 10 with a missile or unit under test (UUT) 12 and the integrated fiber optic missile test system 16 of the present invention. The missile 12 includes a fiber optic interface 18 which facilitates communication with a second fiber optic interface 20 via an optical fiber. Each interface 18, 20 includes a fiber optic transmitter and receiver (not shown).

The integrated fiber optic missile test system 16 contains a data router 22 which connects signals under fiber 19 to missile control electronics 24. In addition, the data router 22 sends digital data to a general purpose (station) computer 26 and video data to a video recorder 28. Data routing is achieved by the use of tag words or by other techniques known in the art. Digital data is routed to and from the computer 26. The digital data allows the computer 26 to command missile actions and receive responses during test and to monitor/record missile commands and responses during flight. Video data is routed to the video recorder 28 for analysis of test and flight performance.

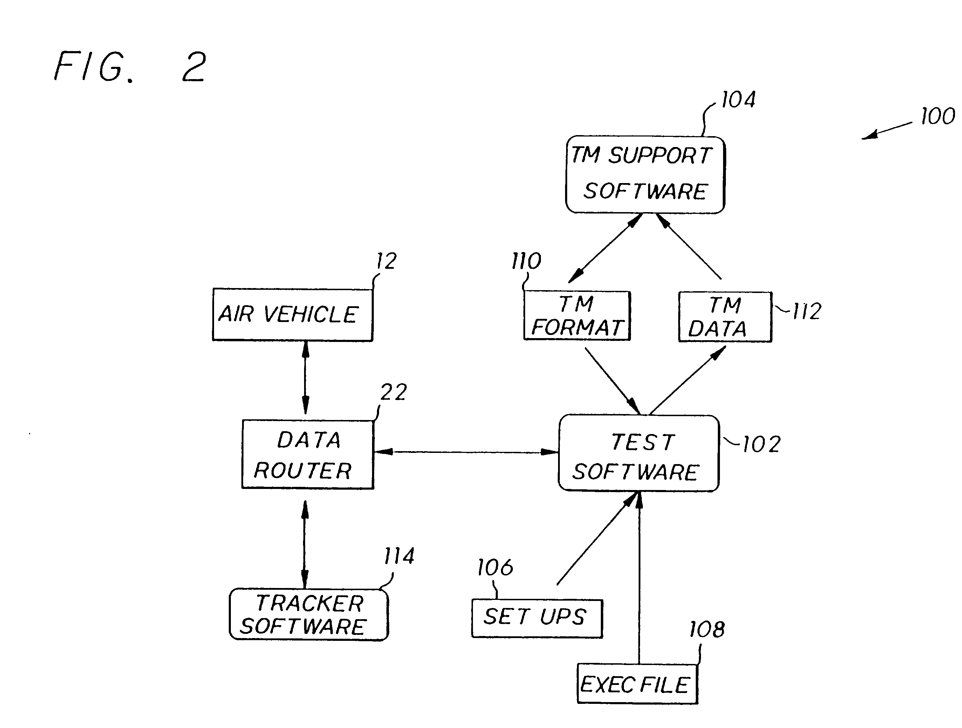

The station computer 26 is programmed to collect and display telemetry data during missile launch. Fig. 2 shows the general functions of the test station software designed to run on the test station computer 26. The test station software is divided into two main functions: test software 102 and telemetry (TM) support software 104.

The test software 102 supports partially automated testing of the missile 12. The test operator must specify the missile commands and data display formats. The test operator must also specify the formats for the analysis of data. Functions provided are:
a) Generate test commands for the missile;
b) collect, display, and store telemetry data 112;
c) create, save, and load setups 106 for various missile tests; and
d) execute 108 test sequences for various missile tests.

The telemetry support software 104 provides offline software to provide general support function for the telemetry data 112. The telemetry support software 104:
a) Edits the telemetry format file 110 and
b) reviews data stored by the test software and generates simulated strip charts and/or tabulated lists.

In operation, the integrated missile test system 16 of the present invention commands missile actions and receives video and test signals along the optical fiber 19 from the missile 12. Stored data is analyzed after the test to determine the condition of the missile 12. A real time test display shows selected signal values from the selected source.

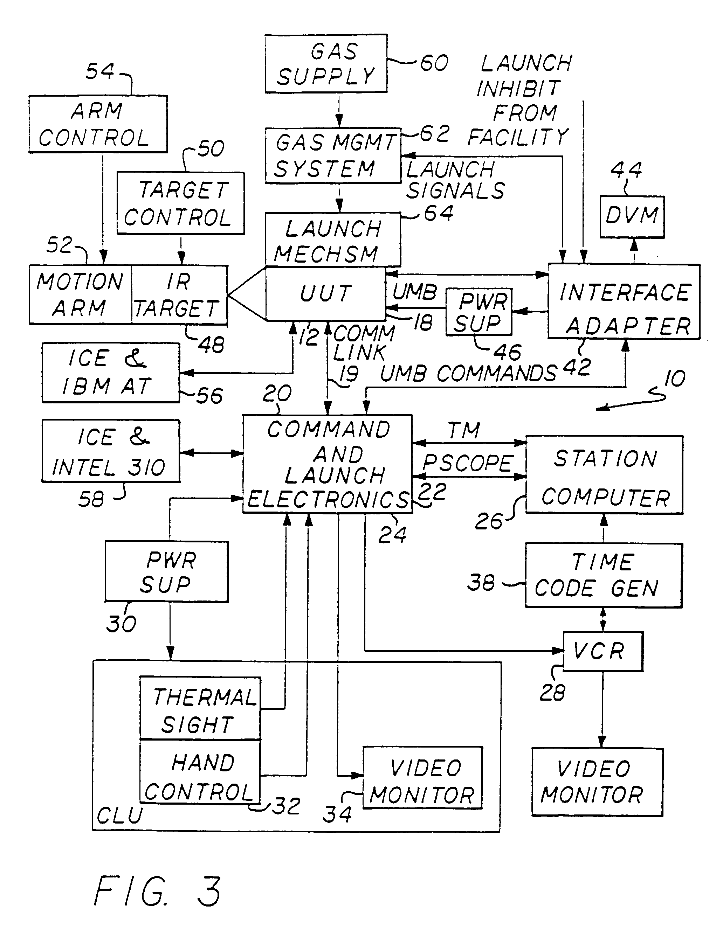

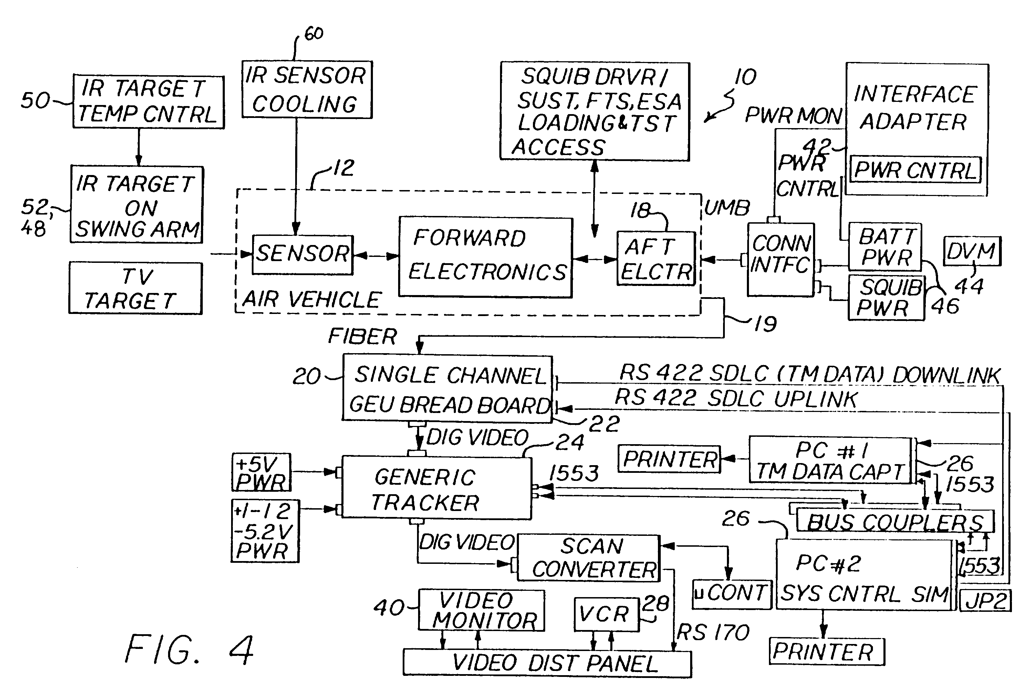

Figs. 3 and 4 show more detailed diagrammatic representations of first and second illustrative test applications with the integrated fiber optic missile test system 16 of the present invention. Like elements are designated by like reference numerals.

Again, each test arrangement provides a missile or unit under test 12. Fiber optic interfaces 18 and 20 facilitate communication along the optical fiber 19. The data router 22 connects signals on the fiber 19 to the missile control electronics 24. In addition, the data router 22 sends digital data to the general purpose computer 26 and video data to the video recorder 28.

As may be appreciated by those skilled in the art, numerous other test elements and devices unique to each different test arrangement may be incorporated.

For example, the command launch unit (CLU) subsystem is resident within the test system 16. The CLU comprises a command and launch electronics (CLE), identified as missile control electronics 24 in Fig. 1. The CLE 24 comprises the electronics which close the missile autopilot loop and process missile video and instrumentation data.

Further, the CLE 24 comprises a power supply 30 of conventional design.

A hand control 32 is provided being the test version of the gunner's controls, i.e. which helps to simulate the gunner being active during a real operation of the missile 12. A video monitor 34 displays missile or thermal sight video pictures.

As mentioned before, the station computer 26, being part of the test system 16 instrumentation system provides the means of retrieving, storing and displaying missile video and instrumentation data. More specifically, the station computer 26 comprises a conventional MS DOS computer used to collect and display telemetry data during missile launch. Computer 26 also provides control and display functions during missile test.

The video recorder 28, mentioned in relation to Fig. 1 may be a commercial video cassette recorder and is used to record missile and thermal sight video.

A time code generator 38 is provided between station computer 26 and video recorder 28 and is also a commercially available unit providing timing information for recording with the video and telemetry data.

For providing power to the missile, an interface system is provided which also provides interlocks for the protection of the missile.

More specifically, the interface system comprises an interface adapter 42 containing circuits for interfacing and monitoring missile power and signals. Further, a digital voltmeter (DVM) 44 is provided, being a conventional DVM for measuring missile/station power supply and signal voltages. For powering the missile 12 during test, a power supply 46 is also provided.

For allowing realistic tests to be performed within test system 16 a target subsystem is provided. The target subsystem essentially comprises an infrared (IR) target 48 being an IR target for the missile seeker, i.e. a sensor on board missile 12 to verify proper system operation and tracking.

IR target 48 is controlled by IR target control 50. This unit provides station control of the IR target 48 source parameters. The IR target 48 is positioned on a motion arm 52. The motion arm 52 provides a moving mount for the IR target 58 used to generate line-off-sight target rates for the missile 12. An arm control 54 controls motion arm 52.

In addition, test system 16 provides for miscellaneous functions, i.e. various functions required for the operation of both system 16 and the missile 12.

In particular, in circuit emulators (ICE) 56, 58 are provided having supporting computers for missile and CLU software development.

Another function is to be performed by a gas supply 60 where gas bottles and pressure regulators provide nitrogen for cooling the missile seeker via a gas management system 62 and a launch mechanism 64.

In order to allow the necessary mechanical functions, supports stands (not shown) are also provided for giving mechanical support to the missile during test. For example, the support stands may comprise a motion arm stand for providing target motion, a missile swing stand for providing missile motion to test autopilot sensors, a launch stand for supporting the missile in the launch tube during test firings, a restrained stand, holding the launch tube during final test of the flight test rounds and a guidance stand holding the guidance section.

Fig. 3, insofar, shows the general cooperation of the various items, mentioned before, whereas Fig. 4 in further details shows some of the necessary electrical and electronic components, power supplies, interfaces, etc., required, as well as the cooperation of two personal computers (PC) used for processing telemetry data and for simulating system control respectively. The invention is, however, not limited to the two test arrangements presented in Figs. 3 and 4 but can be used for any missile connected to control equipment via a fiber optic cable.

## Claims

1. An integrated missile test system for fiber optic guided missiles (12), characterized by:
- first means (20) for receiving first and second signals along an optical fiber (19) from said missile (12), said first means (20) including an optical transmitter and an optical receiver;
- second means (22, 28) for processing said first signal and for reformatting said first signal for display thereof;
- third means (22, 26) for processing said second signal and for reformatting said second signal for display thereof;
- fourth means (34) for displaying the reformatted first signal;
- fifth means (40) for displaying the reformatted second signal, and
- means (26; 100) for sending a test command signal to said missile (12).

2. The system of claim 1, characterized in that said first signal is a video signal.

3. The system of claim 1 or 2, characterized in that said second signal is a test signal.

## Patentansprüche

1. Integriertes Flugkörper-Testsystem für Flugkörper (12), die mittels optischer Fasern gelenkt werden, gekennzeichnet durch:
- erste Mittel (20) zum Empfangen eines ersten und eines zweiten Signals über eine optische Faser (19) von dem Flugkörper (12), wobei die ersten Mittel (20) einen optischen Sender und einen optischen Empfänger aufweisen;
- zweite Mittel (22, 28) zum Verarbeiten des ersten Signals und zum Umformatieren des ersten Signals zu dessen Anzeige;
- dritte Mittel (22, 26) zum Verarbeiten des zweiten Signals und zum Umformatieren des zweiten Signals zu dessen Anzeige;
- vierte Mittel (34) zum Anzeigen des umformatierten ersten Signals;
- fünfte Mittel (40) zum Anzeigen des umformatierten zweiten Signals, und
- Mittel (26; 100) zum Senden eines Testbefehlssignals an den Flugkörper (12).

2. System nach Anspruch 1, dadurch gekennzeichnet, daß das erste Signal ein Videosignal ist.

3. System nach Anspruch 1 oder Anspruch 2, dadurch gekennzeichnet, daß das zweite Signal ein Testsignal ist.

## Revendications

1. Système intégré de test de missile pour des missiles (12) guidés par fibre optique, caractérisé par :
- des premiers moyens (20) pour recevoir des premier et second signaux sur une fibre optique (19) provenant du missile (12), ces premiers moyens (20) comprenant un émetteur optique et un récepteur optique;
- des seconds moyens (22, 28) pour traiter le premier signal et pour changer le format du premier signal pour le visualiser;
- des troisièmes moyens (22, 26) pour traiter le second signal et pour changer le format du second signal pour le visualiser;
- des quatrièmes moyens (34) pour visualiser le premier signal dont le format a été changé;
- des cinquièmes moyens (40) pour visualiser le second signal dont le format a été changé; et
- des moyens (26; 100) pour émettre un signal d'ordre de test vers le missile (12).

2. Système selon la revendication 1, caractérisé en ce que le premier signal est un signal vidéo.

3. Système selon la revendication 1 ou 2, caractérisé en ce que le second signal est un signal de test.
